# EUROPEAN PATENT SPECIFICATION

(11) **EP 1 064 438 B1**
(45) Date of publication and mention of the grant of the patent: **17.12.2003**
(21) Application number: 99908780.2
(22) Date of filing: 19.03.1999
(51) Int. Cl.: E04B 1/78, E04C 2/16, D04H 1/70

(54) **PROCESS AND APPARATUS FOR THE PREPARATION OF A MINERAL FIBRE PRODUCT, USES OF IT AND SUCH PRODUCT**
VERFAHREN UND VORRICHTUNG FÜR DIE HERSTELLUNG EINES MINERALFASERPRODUKTS, SEINE VERWENDUNG UND EIN DERART HERGESTELLTES PRODUKT
PROCEDE ET APPAREIL DE PREPARATION D'UN PRODUIT EN FIBRES MINERALES, PRODUIT AINSI PREPARE ET UTILISATIONS ASSOCIEES

(30) Priority: 19.03.1998 DK 38898
(43) Date of publication of application: 03.01.2001
(73) Proprietor: Rockwool International A/S, 2640 Hedehusene (DK)
(72) Inventor: CRIDLAND, Ian, DK-2720 Vanlose (DK); NORGAARD, Luis, DK-4000 Roskilde (DK); KIRKEBAEK, Jorgen, DK-2680 Solrod Strand (DK)
(74) Representative: Kyed, Iver
(86) International application number: DK9900152
(87) International publication number: WO99047766

(56) References cited:
- WO-A1-97/01006
- WO-A1-97/36034
- US-A- 2 500 690

## Description

The present invention relates to a process for the preparation of a mineral fibre product comprising the steps of providing a primary web of mineral fibre material and having a first thickness, compressing the primary web to a second thickness, allowing the primary web to at least partly re-expand to a third thickness, bringing the primary web to overlap itself under formation of a secondary web from which the product eventually is cut.

Boards of mineral fibre material can be prepared with various properties depending on the desired field of application. The properties are typically controlled by controlling parameters such as fibre composition, fibre dimension, product density and/or the content of various additives in the product, e.g. the type and/or amount of binding agent.

The above mentioned parameters can to some extent be controlled by means of selecting certain processes for forming, collecting and/or treating the fibres.

EP-A1-404 982 discloses a method of and an apparatus for manufacturing a mineral fibre web. A number of fibre forming devices in a fibre forming zone distributes mineral fibres which are deposited on the perforated, curved outer-surfaces of two counter-rotating drums placed in a side-by-side manner with an exit opening for the fibres between them. Through the surfaces of the drums, air is being removed by suction. Due to the rotating motion of the rotating drums, the formed mineral fibre web is conveyed to leave the fibre forming zone through the exit opening in which opening an adjustable roller is placed in order to adjust the thickness of the formed web and assemble the webs formed on the two drums respectively to one web.

US-A-4 950 355 discloses a method of and an apparatus for manufacturing a mineral fibre insulating web having a dense and rigid layer at one surface and/or a number of such layers. The uncured, non-woven mineral fibre web is treated with a binding agent and compacted with rollers and severed into at least two secondary webs, of which at least one is compressed beyond the initial compaction of the primary web. The two secondary mineral fibre webs are rejoined and cured to form a mineral fibre product having two layers of different densities.

WO 97/36034 discloses similarly an apparatus and a process for the production of mineral fibre products, where a secondary mineral fibre web comprising a number of primary web layers is compressed in the height direction as well as in the length direction in a compressing zone in order to induce either a more homogeneous web and/or a corrugation, where the web subsequently optionally is divided in the height direction and one of the divided off tertiary webs is compressed even further whereafter the webs are rejoined and cured together to form a two layer dual-density-product. It is furthermore taught that the compression in the height direction preferably should be maintained until the product is cured. The height compression ratio is stated to be between 1.8:1 and 1.1:1.

DK-B-155 163 discloses a similar method wherein one or more parts of a mineral fibre web comprising a binding agent is compressed before the binder is cured in order to provide a product having two or more layers with mutually different density.

However, not all properties of a mineral fibre product can be cont rolled sufficiently and/or optimally by the prior art methods, and thus there persists a need for an improved method for preparing mineral fibre products having e.g. improved insulating ability, intumescence, elastic modulus, compressibility, cohesiveness, density, density ratio between layers, homogeneity, packing and recovery ability and which products are easy and cost efficient to produce and/or handle.

Accordingly, it is an object of the present invention to provide such a simple and efficient process by which one or more of the above mentioned properties of mineral fibre products can be controlled and improved.

This is obtained by the process according to the invention, characterized in that the said compression of the primary web is carried out by means of one or more rollers operating at an axis load of 50-4000 kg per meter roller width and that the re-expanded webs brought to overlap itself so as to form a secondary web in which the overlapping layers extend mainly parallel to the web surface.

It has been found that particularly advantageous products can be obtained by compressing the primary web using one or more rollers having a preferred axis load of about 50-4000 kg/m roller width, more preferably about 300-3000 kg/m and even more preferably 400-2000 kg/m.

Using an axis load above about 5000 kg/m roller width may cause the fibres to break or even pulverise, and an axis-load of less than about 25 kg/m roller width has no significant impact on the final products.

It is believed that the generally improved properties of the products obtained by the process according to the invention is at least partly due to the circumstance that the process seems to effect the general orientation of the fibres within the product.

In a typical mineral fibre product it is estimated that up untill around 70% of the fibres are oriented in planes more parallel than perpendicular to the plane originally defined by the forming wire on which the fibres were settled during formation of the primary mineral fibre web, i.e. the fibres are more parallel than perpendicular to the top and bottom main surfaces of the primary web and typically also the top and bottom surfaces of the corresponding secondary web, depending on how said secondary web is formed. A plane more parallel with the predominant fibre orientation, i.e. the above mentioned planes, are in the following generally referred to as a predominant fibre orientation plane. Accordingly, at least 30% of the fibres are situated in planes more perpendicular than parallel to the said originally defined plane. Particularly fibres of relatively short length, such as the typical rock fibres, have a tendency to be oriented more randomly, than longer fibres, such as the typical glass fibres.

It has been found that by means of the process according to the invention an even more dominant fibre orientation is induced in the resulting mineral fibre products in general and in rock fibre products or products composed substantially by short fibres in particular.

It has now proven possible to obtain that more than 80% of the fibres are oriented in planes more parallel with than perpendicular to the plane originally defined by the forming wire. Even an orientation of more than 85% or even around 90-95% in planes more parallel than perpendicular to the plane originally defined by the forming wire is obtainable by the process according to the invention. This has hitherto not been obtainable for short mineral fibres or rock fibres by any suitable method.

The more dominant fibre orientation is believed to influence on a wide variety of properties of the product. It has for instance been found that the insulating ability is higher in a direction perpendicular to the dominant fibre orientation than in the direction parallel to said fibre orientation.

By using the process according to the invention, it has thus proven possible to improve the insulating ability in the direction perpendicular to the dominant fibre orientation significantly for a typical rock fibre product.

Another advantage of the process according to the invention is that dynamic elastic properties of the obtainable products are greatly improved in the direction substantially perpendicular to the predominant fibre orientation.

For many purposes such as vibration damping and sound proofing it is generally desirable to use products having as low dynamic elasticity as possible, as these products provide the highest damping effect relatively.

It is generally known that lowering the density of a mineral fibre product will also lower the elastic modulus of the product. In general it is assumed that the dynamic elasticity of a mineral fibre product is a function of density in the power around 2, i.e. S' ≅ k*ρ², where S' is the dynamic stiffness of the produkt in MN/m³, ρ is the density in kg/m³ and k is an appropriate konstant.

Unfortunately, however, lowering the density will also effect the further properties of the product in terms of dimensional stability, strength and static elasticity.

Surprisingly, it has now been found possible to reduce the dynamic stiffness of mineral fibre products, in particular rock fibre products, in the direction substantially perpendicular to the predominant fibre orientation plane with at least 15-20% and even up till around 25-30% by employing the process according to the invention. This has even proven possible without any significant loss of product strength.

Another great advantage of the mineral fibre products obtained by the process according to the invention is that the effects of natural ageing is diminished.

Normally, a mineral fibre product will settle over time and particularly when subjected to the stress of applied static and dynamic forces, e.g. when used as foundation for floors in buildings, heavy vibrating machinery or railroad sleepers. It has surprisingly been found that the amount of consolidation over time is less for the mineral fibre products produced according to the present invention relative to the prior art mineral fibre products.

Accordingly, the mineral fibre products of the present invention are more dimensionally stable over time, and it is thus easier to dimension constructions in which such mineral fibre products are typically used, leading generally to greater safety and lowering of maintenance costs.

It has proven possible to reduce the amount of settling over time of products obtained by the process according to the invention in the direction substantially perpendicular to the predominant fibre orientation plane to around half the amount of similar prior art products.

Another problem solved by the process according to the invention is unwanted density variations typically present in products obtained by the prior art methods.

When settling mineral fibres on a forming wire during the production of such fibres, it is virtually impossible to avoid random density variations throughout the web. These variations are accordingly found in the final products, which in most cases are highly undesirable.

It is therefore a great advantage that the process according to the invention seems to have an equalizing effect on the micro density of the primary web and accordingly on the final mineral fibre product.

This micro density equalization can be seen directly in terms of a more even distribution of the fibres if a thin slice of product is held in front of a light source compared with a similar slice of a prior art product.

The mentioned method can even be used to compensate for the systematic uneven distribution of fibres in the spinning chamber, which unfortunately is typical for most fibre forming devices.

Furthermore, most products obtained from mineral fibre secondary webs have a somewhat varying density in the direction corresponding to the direction of height of the secondary web, in terms of having a higher density near the surfaces and a lower density at the centre. This macro density variation is in most cases undesirable.

By means of the process according to the invention, it is possible to compensate for these variations, i.e. to control the macro density of the web.

This can be done by individually controlling the amount of pressure applied to a number of zones of the primary web, i.e. by compressing zones of relatively low density more than zones of relatively high density.

Another surprising benefit of the process according to the invention is that the amount of intumescence of the product when subjected to moisture is reduced. For a rock fibre product of 150 Kg/m³ the amount of intumescence was reduced to around 80% relative to an otherwise identical prior art test sample as measured in the direction perpendicular to the dominant fibre orientation. Correspondingly, a rock fibre product of 105 Kg/m³ the amount of intumescence was reduced to around 70% relative to an otherwise identical prior art test sample in the direction perpendicular to the dominant fibre orientation.

This is a highly desirable feature that makes mineral fibre products produced by the process according to the invention particularly advantageous over the prior art products for use in a moist or even aquatic environment.

Furthermore, it has surprisingly been found that the packaging properties of mineral fibre products produced by the process according to the invention are greatly improved over prior art products, in terms of recovery and/or packaging volume.

When packing compressible mineral fibre products for shipment and distribution, it is common to compress the products and wrap and seal them in a plastic foil while in compressed state, in order to reduce the space occupied during transportation. At the final destination the plastic foil is removed and ideally the mineral fibre products recover their initial size and shape. However, it is not unusual that the products are permanently deformed or damaged by having been packed in a compressed state, and it is quite common to compromise on the volume reduction in order to prevent the products from such damage. This, on the other hand, increases cost of transportation and in many cases also the ease of handling.

It is therefore a great advantage that the products prepared by the present process exhibit a significantly better recovery than the prior art products, and thus have the ability of being compressed even more leading to a lower transportation volume, decreased transportation and storage cost and facilitated handling.

A further benefit is obtained by the process according to the invention. When the primary web is compressed as indicated, it has been found that the laying out of the secondary web is greatly facilitated, in terms of the primary web being more cohesive. It is thus possible to increase the production speed without the risk of breaking or damaging the primary web during the process.

As mentioned in the introduction, it is common to produce mineral fibre products having a number of layers each possessing a certain density, and particularly products having two layers, where one layer is a soft low-density layer and the other is a hard high-density layer. A typical way of obtaining such a product is to divide a mineral fibre secondary web horizontally into two bands, to compress one of the bands and rejoin the bands and cure the bands together to obtain a product comprising two mutually fixed layers.

By this method, generally known as the dual-density method, it is a common problem that the dividing of the secondary web requires that the secondary web as well as the divided webs have a certain minimum thickness and density.

It has surprisingly been found, that if the secondary mineral fibre web is formed by a primary web which initially has been treated by the process according to the invention, it is possible to operate on thinner and less dense webs as is possible by the prior art dual density methods.

Another way of refining mineral fibre products is generally known as length/height compression (LHC). By this method the secondary mineral fibre web is compressed in the length direction and at the same time kept at a constant height or even simultaneously reduced in height. The length/height compression is i.a. performed in order to obtain products being more stiff.

Such a length/height compression (LHC) can e.g. be performed as disclosed in CH patent no. 620.861, according to which a mineral fibre web successively is conveyed between at least two pairs of cooperating conveyor belts, and where the first pair of conveyor belts is conveying the fibre web by a speed greater than the second pair. The height of the mineral fibre web can i.a. be reduced during such LHC by placing the conveyer belts in such a way that the distance between a pair of corresponding belts gradually is reduced in the direction of movement.

The LHC may also be performed by using two or more pairs of rollers between which the mineral fibre web is conveyed and where the conveying speed of the roller pairs is reduced in the direction of movement, cf. US 2 500 690. The height of the mineral fibre web can i.a. be reduced during such length compression by reducing the distance between the pairs of corresponding rollers gradually in the direction of movement.

A further preferred method of performing the LHC step is disclosed in US 4 632 685.

By length/height compressing a mineral fibre web having a dominant fibre orientation, where the fibres predominantly are oriented in planes or laminations parallel to the length and width directions of the surface of the conveying means, (i.e. the top and bottom surfaces of the web), it is possible to break up the fibre laminations within the web in a "wave-formed" pattern (similar to corrugated paper) in such a way that the fibres subsequently predominantly are situated in planes more perpendicular to the said surfaces, i.e. planes oriented in the width height directions.

As the fibre orientation, in terms of the fibres predominantly being situated in planes more parallel than perpendicular to the surface of the conveying means, can be greatly improved by the process according to the invention. It is furthermore possible to obtain particularly advantageous LHC products from a mineral fibre web having been processed according to the invention, in terms of the LHC exhibiting an even more expressed wave-formed fibre orientation pattern.

According to the invention, it is preferred to compress the secondary web in the length direction by the above mentioned methods in an amount of around 1.1:1 to 5:1, more preferably 2.5:1 to 3.5:1.

However, further more special preferable embodiments of the process according to the invention include the provisions of forming, compressing and/or treating the web as disclosed in particular in WO 95/20708, and Danish patent application numbers 1500/96 and 266/97.

Another preferred way of using the improved properties of the products obtainable by the process according to the invention is to cut the secondary web into a number of lamellas having a top and bottom surface corresponding to the top and bottom surface of the secondary web, to form a pile of a number of such lamellas, in which pile the top surface of the first lamella faces the bottom surface of the next lamella and so forth and to hold the lamellas together as known in the art of lamella mats. In this way, it is possible to form mats having any desired length by adding the appropriate number of lamellas to the pile. The lamellas according to the invention can be cut directly from the untreated secondary web, or from a secondary web that has been longitudinally compressed.

Such mats formed from a mineral fibre web produced by the process according to the invention has proven to be excellent for insulating pipes, and particularly pipes having large or non-standard diameters or shapes.

It is generally a problem to insulate pipes having large or odd diameters or shapes because pre-produced pipe sections are not available. Accordingly, it is common to wrap the pipes in a number of mats of insulating material and to fixate the mats by use of wire.

Because of the improved elasticity and delamination properties of the mats formed from a mineral fibre web produced by the process according to the invention, these mats are highly advantageous compared to similar prior art products in terms of ease of handling when fitting the mats on the pipes as well as the mats being more cohesive and therefore less vulnerable.

Furthermore, it is a common problem when fitting insulating mats on pipes that the wire used for fixating the mats cuts into the material and in some cases even slices through the material.

The mats formed from a mineral fibre web produced by the process according to the invention has proven to have excellent resistance towards the wire cuts.

As the predominant fibre orientation was substantially parallel with the top and bottom surfaces of the original secondary web, the predominant fibre orientation of the lamella-mat are substantially in planes extending in the width and thickness directions of the mat, accordingly the mat are more stiff in the said directions and thus more capable of resisting the wire cuts.

It is a further general advantage of the process according to the invention that it requires only a small change of the existing mineral fibre production apparatuses, in terms of e.g. placement of one or more compression rollers pressing against the primary web on the forming wire, to enable the production of mineral fibre boards having the desired properties.

For some applications, it may be preferable to compress the primary web more in some longitudinally extending zones, than in other longitudinally extending zones, e.g. in order to provide a layered structure, or if the product is to be separated into two or more products having different properties. However according to the invention, it is preferred to compress the primary web at a substantially uniform ratio in the entire width of the web. It is particularly preferable that the product has substantially the same properties throughout the entire product as seen in a certain direction, e.g. in terms of dynamic stiffness or the density being substantially the same in the full thickness of the product and at any point perpendicular to the main surfaces.

The compression process according to the invention may be repeated any number of times. By applying more than one compression step, it is possible to use a lower compression ratio compared to when only one compression step is applied, thus reducing the stress implied on the web during the compression and thereby decreasing the number of broken and/or damaged fibres.

When applying more than one compression step, the compression ratio of each step may either be the same or vary, e.g. in terms of gradually lowering or raising the compression ratio successively.

It is furthermore believed that the type and amount of binding agent used has an impact on the properties of the mineral fibre products.

According to another preferred embodiment of the process according to the invention, an amount of binding agent of 0.5-15 weight-%, preferably 0.5-10 weight-% and more preferably 0.5-5 weight-% is added to the primary web, as measured in the final product.

The binding agent is preferably added as an aqueous suspension of e.g. phenol formaldehyde urea, acrylic-copolymer, resorsinole, furan or melamine resin. It is preferable to add the binding agent before the compression of the primary web.

Furthermore, it has been found that binders of the above type are very well suited for the purpose of obtaining mineral fibre boards having the desired properties.

The compression of the mineral fibre web may be performed by any means capable of inducing the prescribed amount of compression, e.g. rollers, conveyor bands, pistons or the like. However, rollers have proven to be most easily controlled.

According to a preferred embodiment of the process according to the invention, the compression is thus performed by means of rollers pressing against the primary web.

According to another preferred embodiment of the process according to the invention, it has proven advantageous to use rollers or wheels being somewhat resilient. Preferred rollers comprise a flexible suspension and/or a rubber coating, e.g. as a sort of tyres.

By using rollers having such a resilient surface or suspension, it is possible to reduce the damage induced on the primary web by the compression in terms of fewer damaged or broken fibres.

However, it has proven particularly advantageous to use rollers having a smooth non-sticky pressure applying surface of e.g. metal or polytetrafluoroethylene. Hereby it is obtained that the primary web does not stick to the rollers, which might otherwise become a severe problem during the compression step.

Generally, the rollers can have any size as long as they are capable of compressing the web in the said manner. However, it is particularly preferred to use rollers having a diameter of 5-70 cm, more preferably of 15-50 cm and even more preferably of 20-40 cm. If the rollers are too small, the primary web might build up in front of the rollers and eventually stop the process. Too large rollers are generally more difficult to handle.

Any number of rollers can be used for compressing the primary web, however it has proven particularly advantageous to use rollers having a width of around 30-600 mm, more preferably around 50-300 mm and even more preferably 80-150 mm.

The rollers can be disposed in a side by side manner or in a displaced manner along both the longitudinal and transversal direction of the web. It has proven to be particularly expedient to arrange the rollers in two rows arranged one after the other in the longitudinal direction of the primary web in which rows the rollers are placed side by side in the transversal direction of the web with a gap between the rollers and, and in such a manner that the gaps between the rollers of the first row are covered by the rollers of the second row.

The invention furthermore relates to a mineral fibre board obtainable by the process according to the invention. The typical mineral fibre board of the invention has an average density in the range of 20-400 kg/m³.

The density of products meant for reducing the noise from steps are typically and desirably around 70-180 kg/m³ and preferably around 80-140 kg/m³ and products to be placed under railroad sleepers are typically around 140-250 kg/m³ and preferably around 150-200 kg/m³.

The mineral fibre boards according to the invention have as mentioned above particularly advantageous properties, e.g. in terms of better insulating ability, less intumescence, more stiffness and/or lowered dynamic elastic modulus.

It has hitherto been virtually impossible to obtain mineral fibre products having these desired properties, particularly when the fibre length is short, i.e. less than 7 mm and more particularly if the fibres are around 2-5 mm in length in average.

The mineral fibre products according to the invention is typically and preferably rectangularly box-shaped having two main surfaces, two side surfaces and two end surfaces. The main surfaces are typically and preferably situated in mutually parallel planes. Furthermore, the main surfaces are typically and preferably the largest surfaces, the side surfaces the second largest and the end surfaces the smallest of the surfaces. However, the products can generally have any shape.

It is a further great advantage that the mineral fibre board according to the invention, can be substantially constituted by rock fibres, which generally are shorter and thinner than e.g. glass fibres.

Rock fibres are typically around 3 mm long and around 3 µm in diameter in average. Glass fibres are typically somewhat more than 7 mm long having a diameter of at least 3-4 µm.

The sizes of mineral fibres, however, also depends on the spinning process used to obtain the fibres. Spinning of fibres by means of letting a stream of molten mineral hit outer peripheral surface of a series of spinning wheels as known in the art tends to create shorter fibres than e.g. is created by the process where a number of rotating cups having orifices along the rim comprises molten mineral material within the cup and which material is flung through said orifices and thus fiberized. The latter process also being known in the art.

Accordingly, it is a great advantage that it is now possible to obtain mineral fibre products having the desired properties regardless of the process for producing said fibres.

It is generally desirable to use rock fibres rather than glass fibres because rock fibres are more temperature stable and because less binder is needed to adhere the fibres together and, thus making the production process easier and cheaper, and furthermore reducing the fire hazard when the boards are used e.g. in buildings.

Mineral fibre products according to the invention are particularly advantageous for use as sound insulation and controlling, fire insulation and inhibition as well as thermal insulation. The products are particularly suitable for damping vibrations from e.g. vibrating machinery, railroads or the like. Furthermore, the products are well suited for use in moist or aquatic environment and thus also for use as plant growth medium.

Accordingly, the invention furthermore relates to the use of such mineral fibre boards according to the invention for the above mentioned purposes.

Moreover, the invention relates to an apparatus for carrying out the process according to the invention, which apparatus comprises means for providing a primary web of mineral fibre material comprising a binding agent and having a first thickness, one or more rollers for temporarily compressing the primary web to a second thickness at an axis load of 50-4000 kg per meter roller width, means for bringing the primary web to overlap itself under formation of a secondary web, and means for curing the binding agent in the secondary web and means for optionally cutting the web to obtain said mineral fibre board.

Preferably the apparatus comprises means for removing air through the perforated forming wire.

According to the invention, the primary web can be brought to overlap itself by any means capable of producing a secondary web comprising a number of primary web layers, e.g. by means of a pendulum distributer as known in the art from documents such as WO 88/03509 or WO 97/01006.

Alternatively, this step can be performed by means of cutting the primary web into sections and forming a secondary web by placing a number of such primary web sections in a sandwich-like manner e.g. as disclosed in EP-B1-0 297 111.

According to a preferred embodiment of the apparatus, the means for reducing the thickness of the web is a number of rollers placed over the forming wire. The rollers may be placed in any manner. According to one embodiment, it is preferable to place them on a single axis. In this way, it is easy to control the axis-load and thus the compression force pressing against the primary web.

It has, however, proven particularly expedient to have separate suspension for each of the rollers. In this way, the compressing force can be controlled separately for each roller. It is even more preferable to provide control means for controlling the compression force of the roller(s) dynamically.

The individually suspended rollers can be disposed in a side by side manner or in a displaced manner along both the longitudinal and transversal direction of the web. It has proven to be particularly expedient to arrange the rollers in two rows arranged one after the other in the longitudinal direction of the primary web in which rows the rollers are placed side by side in the transversal direction of the web with a gap between the rollers and, and in such a manner that the gaps between the rollers of the first row are covered by the rollers of the second row.

It is possible to use the process according to the invention on primary webs having a area weight of around 200 to 1000 g/m². However, the typical primary web for the products according to the invention has a first average thickness of about 3-7 cm and preferably around 4-6 cm, and has a density of about 8-17 kg/m³ and preferably about 10-15 kg/m³ (about 400-600 g/m² area weight, preferably around 450-550 g/m²).

The term mineral fibre as used herein comprises all types of man-made mineral fibres, such as rock, glass or slag fibres, in particular fibres used in materials for the above purposes, and as filler in cement, plastics or other substances, or which are used as culture medium for plants.

The term rock fibre as used herein designates fibres having a composition comprising generally around 34-62 % and preferably around 41-53 weight-% SiO₂, generally around 0.5-25 weight-% and preferably around 5-21 weight-% Al₂O₃, optionally around 0.5-15 weight-% and preferably around 2-9 weight-% total iron oxides, generally around 8-35 weight-% and preferably around 10-25 weight-% CaO, generally around 2.5-17 weight-% and preferably around 3-16 weight-% MgO, optionally around 0.05-1 weight-% and preferably around 0.06-0.6 weight-% MnO, generally around 0.4-2.5 weight-% and preferably around 0.5-2 weight-% K₂O, and further comprising Na₂O in an amount of less than around 5 weight-%, preferably less than around 4 weight-% and more preferably between around 1 and 3.5 weight-%, TiO₂ in an amount of more than around 0.2-2 weight-%. Preferably rock fibres does not comprise BaO or Li₂O in any significant amount and the content of B₂O₃ is preferably less than 2%. Rock fibres typically have a glass transition temperature (Tg) above 700 °C, preferably above 730 °C and more preferably between around 760 and 870 °C. The density of rock fibres are typically above around 2.6 g/cm³ and preferably between around 2.7 and 3 g/cm³. The refractive index of rock fibres are typically above around 1.55 and preferably between around 1.6 and 1.8.

All mineral fibre webs mentioned in the present application are non-woven mineral fibre webs.

The term binding agent as used herein comprises any material which is suited as binding agent in mineral fibre materials for the above products, e.g. phenol formaldehyde urea, acrylic-copolymer, resorsinole, furan or melamine resin. Such binding agents are preferably supplied to the mineral fibre material in the form of aqueous suspensions.

The term primary mineral fibre web as used herein designates a newly formed mineral fibre web of a typical height (thickness) of 3-7 cm. which is meant for being sandwiched with a number of corresponding primary web layers, preferably constituted by the same primary web in order to obtain a secondary web. A particularly preferred way of obtaining such primary and secondary mineral fibre webs is disclosed in WO 97/01006. The further process steps disclosed in WO 97/01006 can also be performed in combination with the present invention, exploiting the advantage of the present invention over the disclosure WO 97/01006; that i.a. the significantly higher homogeneity and controlled fibre orientation can be obtained according to the present invention.

The term rollers as used herein comprises both rollers, wheels and bands acting substantially as rollers. The rollers may be solid, perforated or hollow, having tyres, and/or any straight, curved or patterned pressure-applying surfaces.

In the following, the invention will be described in more detail by way of an illustration:
- Fig 1. Shows a cross sectional view of a prior art rock fibre product.
- Fig. 2. Shows a cross sectional view of a rock fibre product according to the invention.
- Fig. 3 Illustrates a preferred way for obtaining the primary web to be compressed according to the invention.
- Fig. 4 Illustrates a preferred way of bringing the primary web to overlay itself, i.e. the formation of the secondary web.

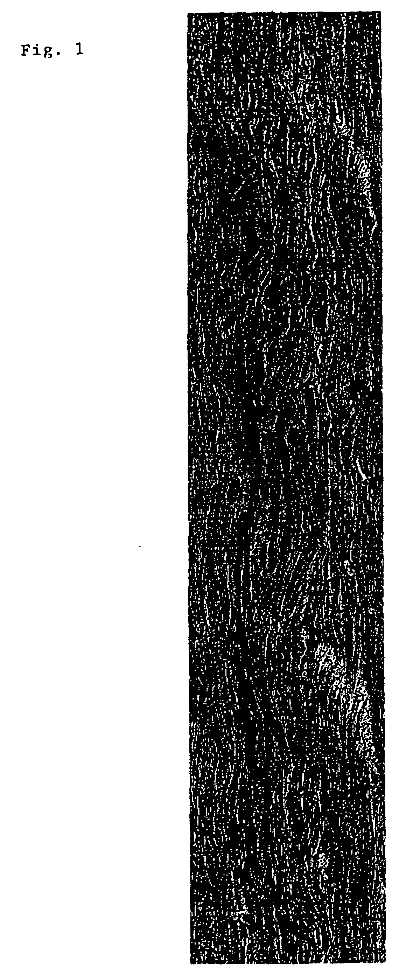

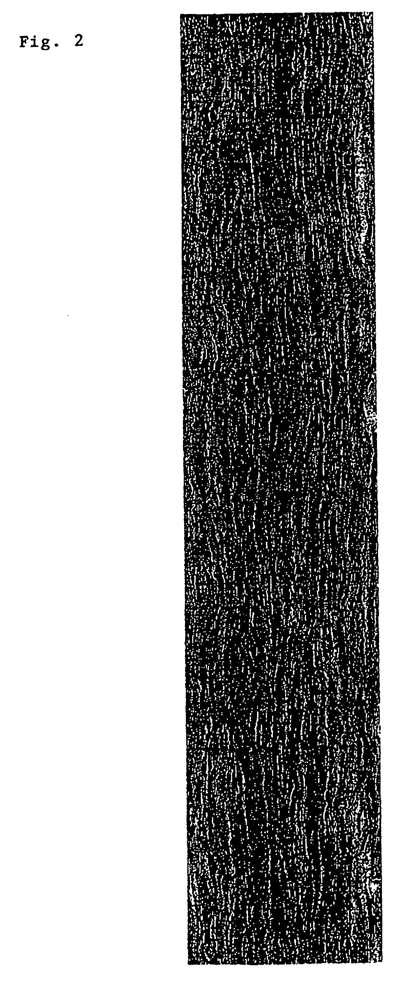

Figure 1 and 2 are photographs of cross sections of a typical prior art product and a product according to the invention respectively. Except for the product according to the invention having been treated by the process according to the invention, the two products are substantially identical.

By comparing figure 1 and 2, it is apparent that the fibre orientation is significantly more homogenous in the product according to the invention.

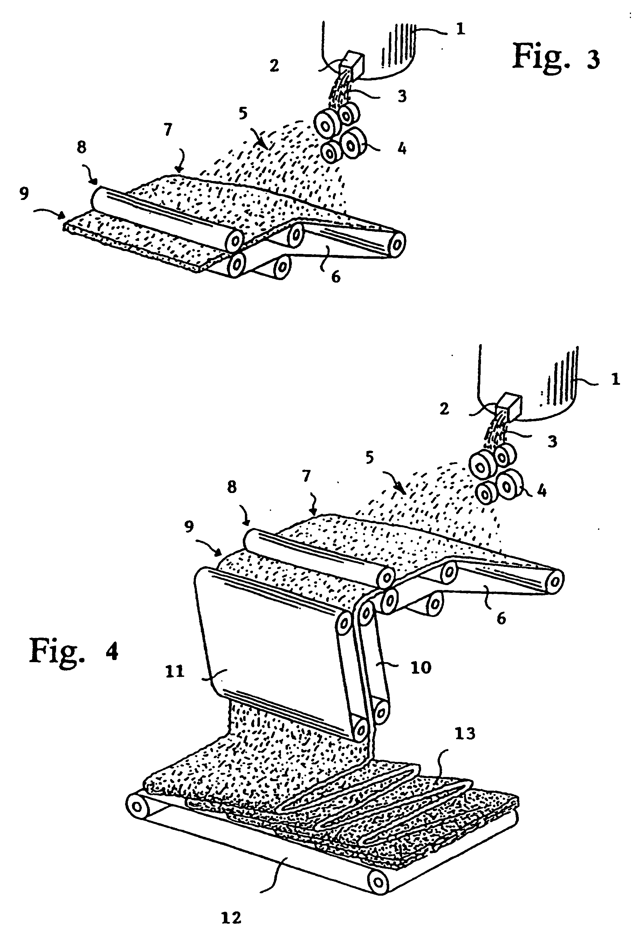

In Fig. 3, the steps of producing the primary mineral fibre web are disclosed. The first step involves the formation of mineral fibres from a mineral fibre forming melt which is produced in a furnace 1 and which is supplied from a spout 2 of the furnace 1 to a total of four rapidly rotating spinning-wheels 3 to which the mineral fibre forming melt is supplied as a mineral fibre forming melt stream 4. As the mineral fibre forming melt stream 4 is supplied to the spinning-wheels 3 in a radial direction relative thereto, a gas stream is simultaneously supplied to the rapidly rotating spinning-wheels 3 in the axial direction thereof causing the formation of individual mineral fibres or bunches or tufts of mineral fibres which are expelled or sprayed from the rapidly rotating spinning-wheels 3 as indicated by the reference numeral 5. The gas stream may constitute a so-called temperature treatment gas stream, normally a cooling gas stream. The mineral fibre spray 5 is collected on a continuously operated first conveyer belt 6 forming the primary mineral fibre web 7. A heat-curable bonding agent is also added to the primary mineral fibre web 7 either directly to the primary mineral fibre web 7 or at the stage of expelling the mineral fibres from the spinning-wheels 3, i.e. at the stage of forming the individual mineral fibres. The binder can of course be any known binder for use in combination with mineral fibres, i.e. also a thermoplastic binder. The first conveyer belt 6 is, as is evident from Fig. 3, composed of two conveyer belt sections. A first conveyer belt section which is sloping relative to the horizontal direction and relative to a second substantially horizontal conveyer belt section. The first section constitutes a collector section, whereas the second section constitutes a transport section. This can of course be made in any other way known in the art. The conveyor belt(s) used for collecting the fibres are preferably foraminous and provided with means (not shown) for the suction of air through the belts to facilitate the layering of the fibres. This increases the homogeneity of the fibre product formed even further by ensuring a better distribution of the fibres, i.e. in terms of spots with low fibre density having the highest airflow through the belt which then leads to layering of more fibres there, etc.

It is to be realized that the primary mineral fibre web 7 produced in the first production step illustrated in Fig. 3 unless manipulated according to the invention and dependent on the specific fibre forming process employed contains as disclosed above only up till around 70% mineral fibres arranged in planes which are more or less predominantly parallel to conveyor belt 6, and a major part of said fibres within said planes being directed more or less in the direction of transportation determined by the first conveyer belt 6, i.e. in the longitudinal direction of the first conveyer belt 6 and consequently in the overall longitudinal direction of the basic or primary mineral fibre insulating web 7 collected on the first conveyer belt 6. This fibre orientation can be substantially improved or increased according to the present invention by applying the defined compression to the primary web prior to the overlapping procedure and in the above disclosed manner and as defined in the claims. The compression of the primary web 7 having a first height is performed by roller 8 to a second height, and the temporarily compressed primary web 9 re-expand to a third height as disclosed.

Fig. 4 illustrates how the primary mineral fibre web shown in Fig. 3 is preferably brought to overlap itself. The step shown in Fig. 4 basically comprises the first step shown in Fig. 3, i.e. the step of producing the basic or primary mineral fibre web 7 from the mineral fibre forming melt stream 4 generated by means of the spout 2 of the furnace 1 and by means of the rapidly rotating spinning wheels 3 from which the mineral fibre spray 5 is expelled, whereupon the mineral fibre spray 5 is collected on the collector section of the first conveyer belt 6 generating the basic or primary mineral fibre web containing mineral fibres generally or predominantly arranged in the longitudinal direction of the compressed primary mineral fibre web 9. The first section of the first conveyer belt 6 constitutes as stated above a collector section, whereas the second section of the conveyor belt 6 constitutes a transport section by means of which the compressed primary mineral fibre web 9 is transferred to a second and a third continuously operated conveyer belt designated the reference numeral 10 and 11, respectively, which are operated in synchronism with the first conveyer belt 6 sandwiching the compressed primary mineral fibre web 9 between two adjacent surfaces of the second and third conveyer belts 10 and 11, respectively.

The second and third conveyer belts 10 and 11, respectively, communicate with a fourth conveyer belt 12 which constitutes a collector conveyer belt on which a secondary mineral fibre web 13 is collected as the second and third conveyer belts 10 and 11, respectively, are swung across the upper surface of the fourth conveyer belt 12 in the transversal direction relative to the fourth conveyer belt 12. The secondary mineral fibre web 13 is consequently produced by arranging the primary mineral fibre web 9 in overlapping relation generally in the transversal direction of the fourth conveyer belt 12.

By producing the secondary mineral fibre web 13 from the compressed primary mineral fibre web 9 as disclosed in Fig. 3, a more homogeneous secondary mineral fibre web 13 is produced in terms of fibre orientation as compared to if the secondary web was produced from the uncompressed primary mineral fibre web 7.

It shall be noted in general that the various of the above disclosed positive effects of the highly plane-oriented fibres as obtained according to the present invention can be used and exploited and/or further manipulated in any way known to the person skilled in the art of mineral fibre products having a pre-dominant fibre orientation, e.g. for the production of lamella mats.

In the following the invention will be described in more detail by way of an example.

### Example 1:

Mineral fibres are obtained by spinning in a spinning chamber, and are made to deposit on a conveyor belt under formation of a primary web having a width of about 1.8 m, a area weight of about 500 g/m², and a first height of about 50 mm. A binder comprising phenol formaldehyde urea in aqueous suspension is continuously distributed to the fibres in the air in the spinning chamber prior to the fibres settling on the conveyor belt, the binder being added in an amount corresponding to a final concentration of phenol formaldehyde urea in the primary web of about 3.8% of the weight of the final product. The primary web is rolled by means of 19 uniform rollers pressing against the web at a pressure of 500 kg per meter roller width, giving the primary web a temporary second height of about 1 mm. The primary web is doubled by pendulum distribution under formation of a secondary web having a width of about 2 m, the secondary web as seen in cross-section comprising about 16 layers of primary web. The secondary web obtained is compressed to a height of 53 mm, and the comprised binder is cured in a curing oven. Finally, the mineral fibre boards are provided by cutting off in the desired sizes from the cured secondary web.

The final mineral fibre board has a density of about 150 kg/m³, an static elastic modulus of 316 kN/m² and a dynamic elastic modulus of 31.7 MN/m³.

### Example 2:

This example describes a comparative test of dynamic stiffness between a number of rock fibre samples prepared by the process according to the invention and otherwise similar rock fibre samples produced by a representative prior art method.

The dynamic stiffness in the direction perpendicular to the predominant fibre orientation, i.e. perpendicular to the top surface of the product, was determined on samples within the density range of 100-175 kg/m3. The amount and type of binding agent as well as product composition in general was the same for both the prior art samples and the samples according to the invention.

By regression analysis, the function describing the dependency of dynamic stiffness on the density was found to be:
Prior art: S'=0.008*ρ^{2.23} MN/m³
Invention: S'=0.006*ρ^{2.23} MN/m³

Accordingly, the dynamic stiffness of the product obtained by the process according to the invention was 25% lower than the dynamic stiffness of the otherwise similar prior art product having same density.

## Claims

1. A process for the preparation of a mineral fibre product comprising the steps of providing a primary web (7) of mineral fibre material and having a first thickness, compressing the primary web (7) to a second thickness, allowing the primary web to at least partially re-expand to a third thickness, and converting the re-expanded primary web (9) into a secondary web (13) by folding, **characterized in that** the compression is carried out by means of one or more pairs of rollers (8) exerting a pressure on the primary web (7) of between 50 and 4000 kg per meter roller width and that the re-expanded primary web (9) is brought to overlap itself so as to form a secondary web (13) in which the overlapping layers extend essentially parallel to the web surface.

2. A process according to claim 1 **characterized in that** the said compression of the primary web is carried out by means of one or more rollers operating at an axis load of 300-3000 kg per meter roller width.

3. A process according to claim 1 or 2 **characterized in that** the entire primary web are compressed in substantially the same amount.

4. A process according to claim 1 or 2 **characterized in that** the amount of compression applied to the web varies in the width direction of the web.

5. A process according to any of the preceding claims **characterized in that** the primary web is compressed at least two times.

6. A process according to any of the preceding claims **characterized in that** the compression is performed using one or more rollers (8) having a diameter of 5-70 cm.

7. A process according to any of the preceding claims **characterized in that** the compression is performed using one or more rollers (8) having a width of 30-600 mm.

8. A process according to any of the preceding claims **characterized in that** the compression is performed using several rollers having individual suspension.

9. A process according to claim 8 **characterized in that** the axis load of each roller is individually controlled.

10. A process according to any of the preceding claims **characterized in that** the secondary web is formed by using a pendulum distributer.

11. A process according to any of the claims 1-9 **characterized in that** the secondary web (13) is formed by cutting the primary web into separate sections and stacking said sections.

12. A process according to any of the preceding claims **characterized in that** the secondary web (13) is divided horizontally into at least two webs and at least one of these webs are compressed before the webs are rejoined.

13. A process according to any of the preceding claims **characterized in that** the secondary web is compressed in the longitudinal direction.

14. A process according to claim 13 **characterized in that** the secondary web is compressed in the longitudinal direction in an amount of between 1.1:1 and 5:1.

15. A process according to any of the preceding claims **characterized in that** the secondary web is cut into lamellas.

16. An apparatus for producing a mineral fibre board, which apparatus comprises means (1-4) for providing a primary web (7) of mineral fibre material comprising a binding agent and having a first thickness, means (8) for temporarily compressing the primary web to a second thickness, means for allowing the primary web (9) to at least partially re-expand to a third thickness, means (10,11) for converting the re-expanded primary web (9) into a secondary web (13) by folding, means for curing the binding agent in the secondary web and means for optionally cutting the web to obtain said mineral fibre board, **characterized in that** the compression is carried out by means of one or more pairs of rollers (8) exerting a pressure on the primary web (7) of between 50 and 4000 kg per meter roller width and that the re-expanded primary web (9) is brought to overlap itself so as to form a secondary web (13) in which the overlapping layers extend essentially parallel to the web surface.

17. An apparatus according to claim 16 **characterized in** having at least 2 rollers.

18. An apparatus according to claim 16 or 17 **characterized in that** the rollers cover the entire width of the primary web.

19. An apparatus according to claim 16-18 **characterized in that** the rollers are arranged in at least two rows displaced in the longitudinal direction of the primary web.

20. An apparatus according to claim 16-19 **characterized in that** the rollers have an average diameter of 5-70 cm.

21. An apparatus according to claim 16-19 **characterized in that** the rollers have an average width of 30-600 mm.

22. An apparatus according to claim 16-19 **characterized in that** the means for bringing the primary web to overlap itself under formation of a secondary web is a pendulum distributor.

## Patentansprüche

1. Verfahren zum Herstellen eines Mineralfaserprodukts mit den folgenden Schritten: Bereitstellen eines Primärnetzes (7) aus Mineraffasermaterial mit einer ersten Dicke, Komprimieren des Primärnetzes (7) auf eine zweite Dicke, Zulassen, dass das Primärnetz zumindest teilweise auf eine dritte Dicke re-expandiert, und Umwandeln des re-expandierten Primärnetzes (9) in ein Sekundärnetz (13) durch Falten, **dadurch gekennzeichnet, dass** die Komprimierung mittels einem oder mehreren Paaren von Walzen (8), welche einen Druck von zwischen 50 und 4000 kg pro Meter Walzenbreite auf das Primärnetz ausüben, ausgeführt wird und dass das re-expandierte Primärnetz (9) dazu gebracht wird, so mit sich selbst zu überlappen, dass es ein Sekundärnetz (13) bildet, bei welchem sich die übertappenden Schichten im wesentlichen parallel zur Netzoberfläche erstrecken.

2. Verfahren nach Anspruch 1, **dadurch gekennzeichnet, dass** die Komprimierung des Primärnetzes mittels einer oder mehreren Walzen, die mit einer Achslast von 300-3000 kg pro Meter Walzenbreite betrieben werden.

3. Verfahren nach Anspruch 1 oder 2, **dadurch gekennzeichnet, dass** das gesamte Primärnetz im wesentlichen um das gleiche Ausmaß komprimiert wird.

4. Verfahren nach Anspruch 1 oder 2, **dadurch gekennzeichnet, dass** das Ausmaß der am Netz durchgeführten Komprimierung in der Breitenrichtung des Netzes variiert.

5. Verfahren nach einem der vorstehenden Ansprüche, **dadurch gekennzeichnet, dass** das Primärnetz zumindest zwei Mal komprimiert wird.

6. Verfahren nach einem der vorstehenden Ansprüche, **dadurch gekennzeichnet, dass** die Komprimierung unter Verwendung einer oder mehrerer Walzen (8) mit einem Durchmesser von 5-70cm durchgeführt wird.

7. Verfahren nach einem der vorstehenden Ansprüche, **dadurch gekennzeichnet, dass** die Komprimierung unter Verwendung einer oder mehrerer Walzen (8) mit einer Breite von 30-600 mm durchgeführt wird.

8. Verfahren nach einem der vorstehenden Ansprüche, **dadurch gekennzeichnet, dass** die Komprimierung unter Verwendung mehrerer Walzen mit einzelner Aufhängung durchgeführt wird.

9. Verfahren nach Anspruch 8, **dadurch gekennzeichnet, dass** die Achslast jeder Walze einzeln gesteuert wird.

10. Verfahren nach einem der vorstehenden Ansprüche, **dadurch gekennzeichnet, dass** das Sekundärnetz unter Verwendung eines Pendelverteilers (pendulum distributor) gebildet wird.

11. Verfahren nach einem der Ansprüche 1 bis 9, **dadurch gekennzeichnet, dass** das Sekundärnetz (13) durch Zerschneiden des Primärnetzes in einzelne Abschnitte und Stapeln der Abschnitte gebildet wird.

12. Verfahren nach einem der vorstehenden Ansprüche, **dadurch gekennzeichnet, dass** das Sekundärnetz (13) horizontal in zumindest zwei Netze geteilt wird und zumindest eines dieser Netze komprimiert werden, bevor die Netze wieder zusammengefügt werden.

13. Verfahren nach einem der vorstehenden Ansprüche, **dadurch gekennzeichnet, dass** das Sekundärnetz in der Längsrichtung komprimiert wird.

14. Verfahren nach Anspruch 13, **dadurch gekennzeichnet, dass** das Sekundärnetz in der Längsrichtung um ein Ausmaß von zwischen 1,1:1 und 5:1 komprimiert wird.

15. Verfahren nach einem der vorstehenden Ansprüche, **dadurch gekennzeichnet, dass** das Sekundärnetz in Lamellen geschnitten wird.

16. Einrichtung zum Herstellen eines Mineralfaserbrettes, wobei die Einrichtung eine Vorrichtung (1-4) zum Bereitstellen eines Primärnetzes (7) aus Mineralfasermaterial mit einem Bindemittel und mit einer ersten Dicke, eine Vorrichtung (8) zum vorübergehenden Komprimieren des Primärnetzes (9) auf eine zweite Dicke, eine Vorrichtung zum Zulassen, dass das Primärnetz zumindest teilweise auf eine dritte Dicke re-expandiert, eine Vorrichtung (10, 11) zum Umwandeln des re-expandierten Primärnetzes (9) in ein Sekunkärnetz (13) durch Falten, eine Vorrichtung zum Aushärten des Bindemittels in dem Sekundärnetz und eine Vorrichtung zum wahlweisen Zerschneiden des Netzes, um das Mineralfaserbrett zu erlangen, aufweist, **dadurch gekennzeichnet, dass** die Komprimierung mittels einem oder mehreren Paaren von Walzen (8), die einen Druck von zwischen 50 und 4000 kg pro Meter Walzenbreite auf das Primärnetz ausüben, ausgeführt wird, und dass das re-expandierte Primärnetz (9) dazu gebracht wird, so mit sich selbst zu überlappen, dass es ein Sekundärnetz (13) bildet, bei welchem sich die überlappenden Schichten im wesentlichen parallel zur Netzoberfläche erstrecken.

17. Einrichtung nach Anspruch 16, **gekennzeichnet durch** das Aufweisen von zumindest 2 Walzen.

18. Einrichtung nach Anspruch 16 oder 17, **dadurch gekennzeichnet, dass** die Walzen die gesamte Breite des Primärnetzes abdecken.

19. Einrichtung nach Anspruch 16 bis 18, **dadurch gekennzeichnet, dass** die Walzen in zumindest zwei in der Längsrichtung des Primärnetzes versetzten Reihen angeordnet sind.

20. Einrichtung nach Anspruch 16 bis 19, **dadurch gekennzeichnet, dass** die Walzen einen durchschnittlichen Durchmesser von 5-70 cm aufweisen.

21. Einrichtung nach Anspruch 16 bis 19, **dadurch gekennzeichnet, dass** die Walzen eine durchschnittliche Breite von 30-600 mm aufweisen.

22. Einrichtung nach Anspruch 16 bis 19, **dadurch gekennzeichnet, dass** die Vorrichtung, mit der das Primärnetz dazu gebracht wird, mit sich selbst unter Bildung eines Sekundärnetzes zu überlappen, ein Pendelverteiler ist.

## Revendications

1. Procédé pour la préparation d'un produit en fibres minérales comprenant les étapes consistant à fournir un tissu primaire (7) de matériau en fibres minérales et ayant une première épaisseur, à comprimer le tissu primaire (7) à une seconde épaisseur, à permettre au tissu primaire de se re-dilater au moins partiellement à une troisième épaisseur, et à convertir le tissu primaire re-dilaté (9) en un tissu secondaire (13) par pliage, **caractérisé en ce que** la compression est effectuée par le biais d'une ou plusieurs paires de rouleaux (8) exerçant une pression sur le tissu primaire (7) entre 50 et 4000 kg par mesure de largeur du rouleau et **en ce que** le tissu primaire re-dilaté (9) est conduit à se chevaucher lui-même de façon à former un tissu secondaire (13) dans lequel les couches se chevauchant s'étendent principalement en parallèle à la surface du tissu.

2. Procédé selon la revendication 1, **caractérisé en ce que** ladite compression du tissu primaire est effectuée par le biais d'un ou plusieurs rouleaux opérant à une charge d'axe de 300 à 3000 kg par mesure de largeur du rouleau.

3. Procédé selon la revendication 1 ou 2, **caractérisé en ce que** la totalité du tissu primaire est compressée en sensiblement la même quantité.

4. Procédé selon la revendication 1 ou 2, **caractérisé en ce que** la quantité de compression appliquée au tissu varie dans le sens de la largeur du tissu.

5. Procédé selon l'une quelconque des revendications précédentes, **caractérisé en ce que** le tissu primaire est compressé au moins deux fois.

6. Procédé selon l'une quelconque des revendications précédentes, **caractérisé en ce que** la compression est effectuée en utilisant un ou plusieurs rouleaux (8) ayant un diamètre de 5 à 70 cm.

7. Procédé selon l'une quelconque des revendications précédentes, **caractérisé en ce que** la compression est effectuée en utilisant un ou plusieurs rouleaux (8) ayant une largeur de 30 à 600 mm.

8. Procédé selon l'une quelconque des revendications précédentes, **caractérisé en ce que** la compression est effectuée en utilisant plusieurs rouleaux ayant une suspension individuelle.

9. Procédé selon la revendication 8, **caractérisé en ce que** la charge d'axe de chaque rouleau est contrôlée individuellement.

10. Procédé selon l'une quelconque des revendications précédentes, **caractérisé en ce que** le tissu secondaire est formé en utilisant un distributeur pendulaire.

11. Procédé selon l'une quelconque des revendications 1 à 9, **caractérisé en ce que** le tissu secondaire (13) est formé en coupant le tissu primaire en sections séparées et en empilant lesdites sections.

12. Procédé selon l'une quelconque des revendications précédentes, **caractérisé en ce que** le tissu secondaire (13) est divisé horizontalement en au moins deux tissus et au moins un de ces tissus est compressé avant que les tissus ne soient rassemblés.

13. Procédé selon l'une quelconque des revendications précédentes, **caractérisé en ce que** le tissu secondaire est compressé dans le sens longitudinal.

14. Procédé selon la revendication 13, **caractérisé en ce que** le tissu secondaire est compressé dans le sens longitudinal dans une quantité de 1,1:1 à 5:1.

15. Procédé selon l'une quelconque des revendications précédentes, **caractérisé en ce que** le tissu secondaire est coupé en lamelles.

16. Appareil pour produire une planche en fibres minérales, lequel appareil comprend des moyens (1 à 4) pour fournir un tissu primaire (7) d'un matériau en fibres minérales comprenant un agent liant et ayant une première épaisseur, un moyen (8) pour compresser temporairement le tissu primaire à une seconde épaisseur, un moyen pour permettre au tissu primaire (9) de se re-dilater au moins partiellement à une troisième épaisseur, des moyens (10, 11) pour convertir le tissu primaire re-dilaté (9) en un tissu secondaire (13) par pliage, un moyen pour réticuler l'agent liant dans le tissu secondaire et un moyen pour éventuellement découper le tissu afin d'obtenir ladite planche en fibres minérales,
**caractérisé en ce que** la compression est conduite par le biais d'une ou plusieurs paires de rouleaux (8) exerçant une pression sur le tissu primaire (7) entre 50 et 4000 kg par mesure de largeur de rouleau et **en ce que** le tissu primaire re-dilaté (9) est conduit à se chevaucher lui-même de façon à former un tissu secondaire (13) dans lequel les couches se chevauchant s'étendent principalement en parallèle à la surface du tissu.

17. Appareil selon la revendication 16, **caractérisé en ce qu'**il a au moins 2 rouleaux.

18. Appareil selon la revendication 16 ou 17, **caractérisé en ce que** les rouleaux couvrent la largeur entière du tissu primaire.

19. Appareil selon les revendications 16 à 18,
**caractérisé en ce que** les rouleaux sont disposés en au moins deux rangées déplacées dans la direction longitudinale du tissu primaire.

20. Appareil selon l'une quelconque des revendications 16 à 19, **caractérisé en ce que** les rouleaux ont un diamètre moyen de 5 à 70 cm.

21. Appareil selon l'une quelconque des revendications 16 à 19, **caractérisé en ce que** les rouleaux ont une largeur moyenne de 30 à 600 mm.

22. Appareil selon l' une quelconque des revendications 16 à 19, **caractérisé en ce que** le moyen pour conduire le tissu primaire à se chevaucher lors de la formation d'un tissu secondaire est un diffuseur à pendule.
